# EUROPÄISCHE PATENTSCHRIFT

(11) **EP 3 080 668 B1**
(45) Veröffentlichungstag und Bekanntmachung des Hinweises auf die Patenterteilung: **14.06.2017**
(21) Anmeldenummer: 14809323.0
(22) Anmeldetag: 01.12.2014
(51) Int. Cl.: G05B 19/042, G06F 9/44, G06F 11/30

(54) **VERFAHREN ZUR BEEINFLUSSUNG EINES STEUERPROGRAMMS EINES STEUERGERÄTS**
METHOD FOR INFLUENCING A CONTROL PROGRAM OF A CONTROL UNIT
PROCÉDÉ DESTINÉ À INFLUENCER UN PROGRAMME DE COMMANDE D'UN APPAREIL DE COMMANDE

(30) Priorität: 09.12.2013 EP 13196219; 09.12.2013 DE 102013113686
(43) Veröffentlichungstag der Anmeldung: 19.10.2016
(73) Patentinhaber: dSPACE digital signal processing and control engineering GmbH, 33102 Paderborn (DE)
(72) Erfinder: KELLERS, Bastian, 33100 Paderborn (DE); DRESSLER, Marc, 32805 Horn-Bad Meinberg (DE); HUFNAGEL, Thorsten, 33154 Salzkotten (DE)
(86) Internationale Anmeldenummer: PCT/EP2014/076067
(87) Internationale Veröffentlichungsnummer: WO 2015/086357

(56) Entgegenhaltungen:
- DE-A1-102004 027 033
- US-A1- 2010 192 016
- Ibm: "Method to Provide Exclusive Access to a Shared I2C Bus Resource (I2C MUTEX) An IP.com Prior Art Database Technical Disclosure Method to Provide Exclusive Access to a Shared I2C Bus Resource (I2C MUTEX)", , 8. Mai 2002 (2002-05-08), XP055115419, IP.com Electronic Publication: June 21, 2003 Gefunden im Internet: URL:http://ip.com/IPCOM/000015947 [gefunden am 2014-04-25]

## Beschreibung

Die Erfindung betrifft ein Verfahren zur Beeinflussung eines Steuerprogramms eines Steuergeräts gemäß dem Oberbegriff des Patentanspruchs 1.

Steuergeräte werden in großer Zahl in vielen Bereichen der Technik eingesetzt. Ein besonders wichtiger Anwendungsbereich ist unter anderem die Motor-, Getriebe und Fahrwerkssteuerung bei den Automobilen und die Steuerung von Triebwerken bei Flugzeugen. Häufig ist es notwendig, den auf einem programmierten und lauffähigen Steuergerät hinterlegten Programmcode zu ändern, beispielsweise, um eine in dem Programmcode hinterlegte erste Programmroutine testweise durch eine zweite Programmroutine mit veränderter oder erweiterter Funktionalität zu ersetzen. Wenn der Quellcode des Programmcodes nicht vorliegt, ist dazu eine Beeinflussung des auf dem Steuergerät hinterlegten Binärcodes notwendig. Ein Verfahren dazu ist aus der Druckschrift DE 10 2004 027 033 A1 bekannt.

Ein bekanntes Verfahren besteht darin, die zweite Programmroutine derart in das Steuerprogramm einzubinden, dass sie von demselben Prozessorkern ausgeführt wird, der auch die erste Programmroutine ausführt. Ein Nachteil dieses Verfahrens ist, dass durch die zusätzliche Belastung des Prozessorkerns die Abarbeitung des Steuerprogramms ausgebremst wird.

Ein weiteres bekanntes Verfahren besteht darin, die zweite Programmroutine von einem zweiten, außerhalb des Steuergeräts untergebrachten Prozessorkern ausführen zu lassen, beispielsweise in einem mit dem Steuergerät verbundenen Beeinflussungsgerät. Es ermöglicht eine parallele Abarbeitung der zweiten Programmroutine. Nachteile dieses Verfahrens sind der zu seiner Umsetzung nötige zusätzliche Hardwareaufwand und die höheren Latenzen im Datenaustausch zwischen der zweiten Programmroutine und dem Steuerprogramm.

Das Lehrbuch "Handbuch Kraftfahrzeugelektronik" von Henning Walentowitz und Konrad Reif (Vieweg + Teubner Verlag, 2. Auflage 2011) beschreibt in Kapitel 17.2.3 ein gängiges Verfahren zum Aufrufen der zweiten Programmroutine durch einen den ursprünglichen Programmcode ergänzenden Zusatzprogrammteil, beispielsweise eine Servicefunktion.

Der Fachartikel "Operation am offenen Herzen" (Elektroniknet.de, 6. Oktober 2008, http://www.elektroniknet.de/automotive/technik-know-how/test-entwicklungstools/article/1129/0/Operation_am_offenen_Herzen/) erwähnt zudem die Möglichkeit einer steuergeräteinternen parallelen Ausführung der zweiten Programmroutine in einem Steuergerät mit mehreren Prozessorkernen.

Eine Möglichkeit zur schnellen Überschreibung von Variablen in einem Steuergerät beschreibt das Patent US 8 074 118 B2, und die Anmeldung US 2010/019 20 16 B2 beschreibt ein Verfahren zur Beeinflussung eines durch einen Prozessor ausgeführten Programms mittels eines Beeinflussungsgerät durch Überwachung einer Debug-Schnittstelle des Prozessors und Überschreibung eines Variablenwerts auf dem Prozessor mittels der Debug-Schnittstelle.

Ein allgemeiner Nachteil der aus dem Stand der Technik bekannten Verfahren zur Beeinflussung eines Steuerprogramms eines Steuergerätes besteht darin, dass zu ihrer Durchführung eine Änderung des Steuerprogramms, entweder am Quellcode des Steuerprogramms oder an dessen Maschinencode, notwendig ist.

Steuerprogramme sind zumeist modular aufgebaut, d.h. sie bestehen aus vorgefertigten Funktionen, die, insbesondere nach dem Prinzip der graphischen Programmierung, zu einem Steuerprogramm verbunden werden. Dementsprechend ist sowohl unter der ersten Programmroutine als auch unter der zweiten Programmroutine zumeist eine Funktion oder ein Verbund mehrerer Funktionen zu verstehen.

Vor diesem Hintergrund besteht die Aufgabe der Erfindung darin, ein Verfahren zur Beeinflussung eines Steuerprogramms eines Steuergerätes anzugeben, das den Stand der Technik weiterbildet.

Die Aufgabe wird durch ein Verfahren zur Beeinflussung eines Steuerprogramms eines Steuergerätes mit den Merkmalen des Patentanspruchs 1 gelöst. Vorteilhafte Ausgestaltungen sind Gegenstand von Unteransprüchen.

Gemäß dem ersten Gegenstand der Erfindung wird ein Verfahren zur Beeinflussung eines Steuerprogramms eines Steuergerätes bereitgestellt. Das Steuergerät weist einen ersten Speicher zur Aufnahme des Steuerprogramms und das Steuerprogramm eine Vielzahl von ersten Funktionen auf, wobei wenigstens eine der ersten Funktionen für die Steuerung eines Aktors ausgebildet ist. Weiterhin ist eine Vielzahl von Variablen vorgesehen, wobei jeder der Variablen eine Speicheradresse zugeordnet und zwischen den Variablen und den ersten Funktionen eine vorgegebene Zuordnung ausgebildet ist. Das Steuergerät weist mindestens einen Prozessor auf, wobei die Prozessoren des Steuergerätes insgesamt eine Vielzahl von Prozessorkernen, im folgenden Rechenkerne genannt, aufweisen und in einem ersten Rechenkern das Steuerprogramm mit den ersten Funktionen ausgeführt wird. Erfindungsgemäß wird während der Ausführung des Steuerprogramms in einem zweiten Rechenkern des Steuergeräts eine zweite Funktion, im folgenden Bypass-Funktion genannt, abgearbeitet, wobei eine erste Funktion einer Variablen an einer bestimmten Speicheradresse einen ersten Wert zuordnet und den ersten Wert zu einem ersten Zeitpunkt in die Speicheradresse der Variablen schreibt, die Bypass-Funktion der gleichen Variablen einen zweiten Wert zuordnet, zu einem zweiten, späteren Zeitpunkt die Variable mit dem zweiten Wert überschrieben wird und zu einem dritten, noch späteren Zeitpunkt das Steuerprogramm auf den geänderten Wert der Variablen zugreift.

Die Bypass-Funktion weist dabei wenigstens teilweise einen zu der ersten Funktion unterschiedlichen Programmcode auf. Erfindungsgemäß ist eine Kontrollinstanz vorgesehen, die die Zugriffe auf die Speicheradresse der Variablen, d.h. die Lese- und Schreibzugriffe auf die Speicheradresse der Variablen durch das Steuerprogramm und durch die Bypass-Funktion, derart zeitlich aufeinander abstimmt, dass der erste Zeitpunkt vor dem zweiten Zeitpunkt und der zweite Zeitpunkt vor dem dritten Zeitpunkt liegt.

Unter einer Kontrollinstanz ist eine Programmroutine zu verstehen, die die Ausführung der Bypass-Funktion durch den zweiten Rechenkern zeitlich mit der Abarbeitung des Steuerprogramms durch den ersten Rechenkern abstimmt. Die Kontrollinstanz kann als Hardware, Software oder eine Kombination aus beidem implementiert sein. Zu ihren Aufgaben gehört vor allem das Starten der Abarbeitung der Bypass-Funktion zu einem vorgegebenen Zeitpunkt, sodass die Abarbeitung der ersten Funktion und der Bypass-Funktion zumindest teilweise parallel erfolgt, insbesondere zeitgleich zum Start der Abarbeitung der ersten Funktion, und die Sicherstellung von Datenkonsistenz. Um Datenkonsistenz sicherzustellen, ist die Kontrollinstanz zumindest ausgestaltet, das Überschreiben der Variablen mit dem zweiten Wert derart zeitlich mit der Abarbeitung des Steuerprogramms durch den ersten Rechenkern abzustimmen, dass das Überschreiben der Variablen mit dem zweiten Wert zeitlich nach dem letzten Schreibzugriff der ersten Funktion auf die Variable erfolgt, aber vor dem ersten Lesezugriff des Steuerprogramms auf die Variable nach der Abarbeitung der ersten Funktion. Vorteilhafte Ausgestaltungen der Erfindung sehen weitere Maßnahmen zur Sicherstellung von Datenkonsistenz durch die Kontrollinstanz vor, insbesondere derart, dass die Kontrollinstanz sicherstellt, dass Variablen, die sowohl von der ersten Funktion als auch von der Bypass-Funktion eingelesen und verwertet werden oder beiden Funktionen als Argumente übergeben werden, beiden Funktionen mit einheitlichen Werten übergeben werden.

Ein Vorteil des erfindungsgemäßen Verfahrens ist, dass es sich einerseits mit geringem Hardwareaufwand umsetzen lässt, da die Abarbeitung der Bypass-Funktion durch steuergeräteinterne Prozessorressourcen erfolgt, und andererseits wegen der parallelen Abarbeitung der Bypass-Funktion auf einem zweiten Rechenkern die Abarbeitung des Steuerprogramms durch den ersten Prozessorkern nur minimal ausgebremst wird. Dabei ist es unerheblich, ob der zweite Rechenkern von vornherein nicht mit der Abarbeitung des Steuerprogramms beaufschlagt ist oder ob das Steuergerät vor der Ausführung des erfindungsgemäßen Verfahrens derart entsprechend manipuliert wird. Beispielsweise könnte ein Rechenkern zunächst mit einer aus Sicherheitsgründen implementierten redundanten Ausführung des Steuerprogramms beaufschlagt sein, die während des Entwicklungsprozesses nicht benötigt wird und deshalb im Rahmen des Entwicklungsprozesses zur Durchführung des erfindungsgemäßen Verfahrens ausgeschaltet wird.

In einer Weiterbildung der Erfindung ist die Kontrollinstanz wenigstens teilweise durch ein Kontrollprogramm verwirklicht, das auf einem anderen Rechenkern als dem ersten Rechenkern parallel zum Steuerprogramm des Steuergeräts ausgeführt wird. Dabei kann es sich bei dem anderen Rechenkern um einen Rechenkern des Steuergeräts handeln oder um einen außerhalb des Steuergeräts angelegten Rechenkern, beispielsweise einen in einer mit dem Steuergerät verschalteten Überwachungs- oder Schnittstelleneinheit untergebrachten Rechenkern.

In einer anderen Weiterbildung der Erfindung ist die Kontrollinstanz wenigstens teilweise durch einen Zusatzprogrammteil verwirklicht, der ergänzend in den Programmcode des Steuerprogramms eingebunden ist und vom ersten Prozessorkern ausgeführt wird, insbesondere durch mindestens eine ergänzend in das Steuerprogramm eingebundene Serviceroutine. Dabei ist es unerheblich, ob der Zusatzprogrammteil schon bei der initialen Programmierung des Steuergerätes auf Quellcodeebene implementiert wird oder nachträglich durch aus dem Stand der Technik bekannte Methoden in den Binärcode des Steuerprogramms eingefügt wird. In jedem Fall ist der Zusatzprogrammteil insofern kein Teil des Steuerprogramms, dass das Steuerprogramm auch ohne den Zusatzprogrammteil lauffähig und funktionstüchtig wäre.

In einer anderen Weiterbildung der Erfindung ist die Kontrollinstanz wenigstens teilweise durch eine mit dem Steuergerät verschaltbare Überwachungseinheit verwirklicht, insbesondere durch eine als Schnittstelleneinheit ausgebildete Überwachungseinheit. Unter einer Schnittstelleneinheit ist eine Einheit zu verstehen, die ausgestaltet ist, eine Datenverbindung zwischen dem Steuergerät und einem anderen Computersystem herzustellen, beispielsweise einem PC zur Programmierung oder Konfigurierung des Steuergerätes.

Wenn die Kontrollinstanz nicht in Form eines Zusatzprogrammteils implementiert ist, muss sie ausgestaltet sein, den ersten Rechenkern bei der Abarbeitung des Steuerprogramms zu überwachen, um die Abarbeitung der Bypass-Funktion zeitlich mit der Abarbeitung des Steuerprogramms abzustimmen. Bevorzugt ist sie ausgestaltet, die Arbeit des ersten Rechenkerns über eine Datenschnittstelle eines Prozessors zu überwachen. Unter einer Datenschnittstelle ist eine Schnittstelle eines Prozessors zu verstehen, die durch einen zweiten Rechenkern oder eine Überwachungseinheit auslesbar ist und deren ausgegebene Daten Rückschlüsse auf die durch den ersten Rechenkern aktuell bearbeitete Speicheradresse erlauben, insbesondere eine Schnittstelle zur Überwachung des Programmcounters, eine Trace-Schnittstelle oder eine Debug-Schnittstelle.

In einer Ausarbeitung der Erfindung ist die Kontrollinstanz ausgestaltet, über die Datenschnittstelle eines Prozessors Aufrufe oder Beendigungen von Funktionen des Steuerprogramms zu detektieren und die Bypass-Funktion zeitgleich zur ersten Funktion zu starten, sodass eine parallele Abarbeitung der ersten Funktion und der Bypass-Funktion erfolgt.

In einer anderen Ausarbeitung ist die Kontrollinstanz ausgestaltet, über die Datenschnittstelle laufende Abarbeitungen von Funktionen des Steuerprogramms zu detektieren. Beispielsweise ist es möglich, dass die Übertragungsrate der Datenschnittstelle zu gering ist, um den Zeitpunkt des Aufrufs einer ersten Funktion exakt zu detektieren. Ist beispielsweise der Prozessor nur ausgestaltet, die Bearbeitung jeder zehnten Speicheradresse des Steuerprogramms über die Datenschnittstelle mitzuteilen, ist es für die Kontrollinstanz nicht möglich, den genauen Zeitpunkt des Aufrufs einer bestimmten ersten Funktion zu ermitteln. Sie kann aber feststellen, ob die erste Funktion innerhalb der letzten zehn bearbeiteten Speicheradressen aufgerufen wurde und, wenn das der Fall ist, die Abarbeitung der Bypass-Funktion durch den zweiten Rechenkern starten. Weiterhin ist es möglich, dass die Kontrollinstanz die laufende Abarbeitung einer Funktion des Steuerprogramms anhand eines mit der Funktion eindeutig verknüpften Ereignisses erkennt, beispielsweise anhand eines Zugriffs auf eine Variable, auf die nur durch die Funktion zugegriffen wird, oder anhand des Erreichens der Stelle in der Abarbeitung des Programmcodes, an dem die Funktion im Speicher des Steuergeräts abgelegt ist.

In einer Ausbildung der Erfindung ist die Kontrollinstanz ausgestaltet, die Beendigung der ersten Funktion zu erkennen und nach Beendigung der ersten Funktion das Überschreiben der Variablen mit dem zweiten Wert zu veranlassen.

Bevorzugt wird die Abarbeitung der Bypass-Funktion durch den zweiten Rechenkern durch ein Triggersignal gestartet, beispielsweise derart, dass der zweite Rechenkern eine Endlosschleife abarbeitet, in jedem Schleifendurchlauf das Vorhandensein des Triggersignals überprüft und bei positivem Ergebnis der Prüfung die Abarbeitung der Bypass-Funktion startet. In einer Ausgestaltung wird das Triggersignal aus dem Steuerprogramm heraus ausgelöst. Als Trigger kann in dieser Ausgestaltung ein Ereignis dienen, das sich eindeutig der ersten Funktion zuordnen lässt, beispielsweise die Überschreibung einer bestimmten Variablen oder die Ansteuerung eines bestimmten I/O-Pins. In einer anderen Ausgestaltung wird das Triggersignal durch die Kontrollinstanz ausgelöst. Als Trigger kann in dieser Ausgestaltung die Ansteuerung einer eigens zu diesem Zweck hinterlegten Triggervariablen oder die Ansteuerung eines bestimmten Registers des Prozessors dienen.

In einer anderen Ausführung startet die Kontrollinstanz die Abarbeitung der Bypass-Funktion durch den zweiten Rechenkern durch das Setzen des Programmcounters des zweiten Rechenkerns. Beispielsweise kann der zweite Rechenkern, solange er nicht die Bypass-Funktion abarbeitet, mit der Abarbeitung einer Endlosschleife beaufschlagt sein, und die Kontrollinstanz startet die Abarbeitung der Bypass-Funktion, indem sie den Programmcounter des zweiten Rechenkerns auf eine Speicheradresse setzt, an der der Beginn der Bypass-Funktion oder ein Aufruf der Bypass-Funktion hinterlegt ist.

Weiterhin bevorzugt ist die Kontrollinstanz ausgestaltet, den Aufruf der ersten Funktion durch den ersten Rechenkern zu erkennen und unmittelbar nach Aufruf der ersten Funktion die Abarbeitung der Bypass-Funktion durch den zweiten Rechenkern zu starten, oder den Rücksprung aus der der ersten Funktion im Steuerprogramm vorhergehenden Funktion zu erkennen und unmittelbar nach Ausführung des Rücksprung die Abarbeitung der Bypass-Funktion durch den zweiten Rechenkern zu starten, oder eine laufende Abarbeitung der ersten Funktion durch den ersten Rechenkern zu erkennen und unmittelbar nach Erkennung der laufenden Abarbeitung der ersten Funktion durch den ersten Rechenkern die Abarbeitung der Bypass-Funktion durch den zweiten Rechenkern zu starten, sodass die erste Funktion und die Bypass-Funktion zumindest teilweise parallel abgearbeitet werden.

In einer möglichen Ausgestaltung wird die Bypass-Funktion parallel von dem zweiten Rechenkern und zumindest einem dritten Rechenkern abgearbeitet. Insbesondere, wenn die Abarbeitung der Bypass-Funktion allein durch den zweiten Rechenkern länger dauern würde als die Abarbeitung der ersten Funktion durch den ersten Rechenkern und die Bypass-Funktion so beschaffen ist, dass eine parallele Abarbeitung der Bypass-Funktion durch mehrere Rechenkerne bei Wahrung der Datenkonsistenz möglich ist, kann es vorgesehen sein, die Bypass-Funktion auf zumindest den zweiten und einen dritten Rechenkern zu verteilen und sie zumindest von dem zweiten Rechenkern und dem dritten Rechenkern parallel abarbeiten zu lassen. Bevorzugt ist die Kontrollinstanz ausgestaltet, die Verteilung der Bypass-Funktion auf einen oder mehrere Rechenkerne zu steuern.

Um sicherzustellen, dass das Steuerprogramm nach Abarbeitung der ersten Funktion erst dann auf den Wert der Variablen zugreift, nachdem die Variable mit dem von der Bypass-Funktion errechneten zweiten Wert beschrieben wurde, ist in einer Ausführung der Erfindung vorgesehen, dass die Kontrollinstanz die Ausführung des Steuerprogramms durch den ersten Rechenkern verzögert, insbesondere die Abarbeitung des Steuerprogramms nach Abarbeitung der ersten Funktion kurzzeitig anhält. Beispielsweise kann es vorgesehen sein, dass die Kontrollinstanz den ersten Rechenkern kurzeitig anhält oder mittels eines Interrupts den ersten Rechenkern eine Endlosschleife abarbeiten lässt und den Interrupt beendet, nachdem die Bypass-Funktion die Variable mit dem zweiten Wert beschrieben hat. In einer anderen Ausführung ist die Kontrollinstanz ausgestaltet, den zweiten Zeitpunkt so zu wählen, dass die Überschreibung der Variablen mit dem zweiten Wert unmittelbar nach der Beschreibung der Speicheradresse der Variablen mit dem ersten Wert geschieht. Dazu kann vorgesehen sein, dass die Bypass-Funktion den zweiten Wert in eine Speicheradresse eines Pufferbereichs schreibt, die Kontrollinstanz den zweiten Wert aus der Speicheradresse des Pufferbereichs ausliest und unmittelbar nach dem Schreiben des ersten Wertes durch die erste Funktion die Variable mit dem zweiten Wert überschreibt. Alternativ kann auch vorgesehen sein, dass die Bypass-Funktion den zweiten Wert direkt in die Speicheradresse der Variablen schreibt, wobei die Kontrollinstanz ausgestaltet ist, die Abarbeitung der Bypass-Funktion durch den zweiten Rechenkern unmittelbar vor dem Schreiben des zweiten Wertes zu unterbrechen, bis die erste Funktion den ersten Wert in die Speicheradresse der Variablen geschrieben hat. In wiederum einer anderen Ausführung ist eine Kombination der genannten Merkmale vorgesehen, d.h. die Kontrollinstanz ist ausgestaltet, den zweiten Zeitpunkt so zu wählen, dass das Überschreiben der Variablen mit dem zweiten Wert unmittelbar nach dem Schreiben des ersten Wertes durch die erste Funktion stattfindet, sodass eine Verzögerung der Abarbeitung des Steuerprogramms im allgemeinen nicht nötig ist. Gleichzeitig ist die Kontrollinstanz ausgestaltet, die Abarbeitung des Steuerprogramms durch den ersten Rechenkern zu verzögern, wenn der Zeitraum zwischen dem ersten Zeitpunkt und dem dritten Zeitpunkt zu kurz ist, um die Variable rechtzeitig, d.h. vor dem Eintreffen des dritten Zeitpunkts, mit dem zweiten Wert zu überschreiben.

In einer besonders bevorzugten Ausgestaltung der Erfindung ist die Kontrollinstanz ausgestaltet, über eine Datenschnittstelle eines Prozessors Schreibzugriffe des Steuerprogramms auf Variablen des Steuerprogramms zu erkennen, und die Kontrollinstanz ist weiterhin ausgestaltet, Werte, die Variablen von einer ersten Funktion oder einer Bypass-Funktion zugeordnet wurden, in einen Pufferbereich eines Speichers zu schreiben. Insbesondere ist sie ausgestaltet, vor Beginn der Abarbeitung der Bypass-Funktion durch den zweiten Rechenkern ein Abbild einer Eingangsvariablen der Bypass-Funktion in eine Speicheradresse des Pufferbereichs zu schreiben. Unter einer Eingangsvariablen einer Funktion ist dabei jede Variable des Steuerprogramms zu verstehen, die von der Funktion eingelesen wird, um ihren Wert zur Ermittlung eines ersten Wertes oder eines zweiten Wertes der Variablen zu verwenden. Dabei ist vorgesehen, dass die Bypass-Funktion den Wert der im Pufferbereich hinterlegten Eingangsvariablen ausliest. Es ist weiterhin vorgesehen, dass die Kontrollinstanz sicherstellt, dass die erste Funktion und die Bypass-Funktion identische Werte für gleiche Eingangsvariablen einlesen.

In einer besonders bevorzugten Ausgestaltung ist die Kontrollinstanz ausgestaltet, über eine Datenschnittstelle eines Prozessors Schreibzugriffe des Steuerprogramms auf die Eingangsvariablen der Bypass-Funktion zu detektieren, beispielsweise durch Überwachung des Programmcounters des ersten Rechenkerns oder durch Auslesen einer Debug-Schnittstelle oder einer Trace-Schnittstelle des Prozessors. Weiterhin ist die Kontrollinstanz ausgestaltet, alle Schreibzugriffe auf die Eingangsvariablen der Bypass-Funktion in einem Pufferbereich des Speichers nachzuvollziehen, d.h. bei jedem Schreibzugriff auf eine der Eingangsvariablen ein Abbild des neuen Wertes der Eingangsvariablen in den Pufferbereich zu schreiben. Auf diese Weise ist sichergestellt, dass zu jedem Zeitpunkt ein aktuelles Abbild aller Eingangsvariablen der Bypass-Funktion im Pufferbereich des Speichers hinterlegt ist. Beim Starten der Abarbeitung der Bypass-Funktion unterbricht die Kontrollinstanz das Schreiben von Abbildern der Eingangsvariablen in den Pufferbereich, und die Bypass-Funktion liest die Werte der Eingangsvariablen aus dem Pufferbereich aus. Auf diese Weise ist sichergestellt, dass die erste Funktion und die Bypass-Funktion für gleiche Eingangsvariablen identische Werte einlesen. Es ist beispielsweise nicht möglich, dass eine sowohl von der ersten Funktion als auch von der Bypass-Funktion eingelesene Eingangsvariable von der ersten Funktion überschrieben wird, bevor die Eingangsvariable von der Bypass-Funktion eingelesen wurde. Nach Abarbeitung der Bypass-Funktion nimmt die Kontrollinstanz das Schreiben von Abbildern der Eingangsvariablen der Bypass-Funktion in den Pufferbereich des Speichers wieder auf. Es ist weiterhin bevorzugt, dass die Bypass-Funktion alle zweiten Werte von Variablen zunächst in den Pufferbereich schreibt. Auf diese Weise ist es nicht möglich, dass die Bypass-Funktion eine Eingangsvariable der ersten Funktion überschreibt, bevor die erste Funktion den Wert der Eingangsvariablen eingelesen hat.

In einer anderen möglichen Ausgestaltung der Erfindung ist vorgesehen, dass die Kontrollinstanz jeweils unmittelbar vor der Abarbeitung der Bypass-Funktion durch den zweiten Rechenkern einmalig ein Abbild aller Eingangsvariablen der Bypass-Funktion in den Pufferbereich schreibt.

Erfindungsgemäß ist vorgesehen, dass die Kontrollinstanz den ersten Zeitpunkt, den zweiten Zeitpunkt und den dritten Zeitpunkt zeitlich aufeinander abstimmt, derart, dass der erste Zeitpunkt vor dem zweiten Zeitpunkt und der zweite Zeitpunkt vor dem dritten Zeitpunkt liegt. Das bedeutet, dass zuerst die erste Funktion den ersten Wert der Variablen in die Speicheradresse der Variablen schreibt, danach die Speicheradresse der Variablen mit dem zweiten Wert überschrieben wird und danach das Steuerprogramm den zweiten Wert der Variablen aus der Speicheradresse der Variablen einliest. Bevorzugt stellt die Kontrollinstanz diesen zeitlichen Ablauf dadurch sicher, dass die Bypass-Funktion den zweiten Wert der Variablen in eine Speicheradresse des Pufferbereichs schreibt. Die Kontrollinstanz ist ausgestaltet, den zweiten Wert der Variablen aus der Speicheradresse des Pufferbereichs auszulesen, das Schreiben des ersten Wertes der Variablen durch die erste Funktion zu detektieren und die Variable unmittelbar nach dem Schreiben des ersten Wertes durch die erste Funktion mit dem zweiten Wert zu überschreiben. Auf diese Weise ist es möglich, den ersten Zeitpunkt, den zweiten Zeitpunkt und den dritten Zeitpunkt ohne Verzögerung der Abarbeitung des Steuerprogramms zeitlich aufeinander abzustimmen, sofern der Zeitraum zwischen dem ersten Zeitpunkt und dem dritten Zeitpunkt, d.h. zwischen dem Schreiben des ersten Wertes der Variablen durch die erste Funktion und dem nächsten Einlesen des Wertes der Variablen durch das Steuerprogramm, hinreichend kurz ist, um die Variable innerhalb dieses Zeitraums mit dem zweiten Wert zu überschreiben.

In einer besonders bevorzugten Ausgestaltung der Erfindung ist vorgesehen, die Länge des Zeitraums zwischen dem ersten Zeitpunkt und dem dritten Zeitpunkt zu ermitteln, beispielsweise anhand einer Messung oder anhand einer Zeitabschätzung auf Basis einer Analyse des Binärcodes des Steuerprogramms, und die ermittelte Länge des Zeitraums der Kontrollinstanz zur Verfügung zu stellen, wobei die Kontrollinstanz ausgestaltet ist, die Abarbeitung des Steuerprogramms durch den ersten Rechenkern zwischen dem ersten Zeitpunkt und dem dritten Zeitpunkt zu verzögern, wenn die Länge des Zeitraums einen vorgegebenen Wert unterschreitet, und auf diese Weise die Länge des Zeitraums bei Bedarf zu vergrößern.

Es versteht sich, dass sich unter Anwendung des erfindungsgemäßen Verfahrens auch mehr als eine Bypass-Funktion auf dem Steuergerät hinterlegen lässt. In einer möglichen Ausgestaltung sind mehrere Bypass-Funktionen hinterlegt, um mehrere erste Funktionen gemäß dem erfindungsgemäßen Verfahren zu beeinflussen. In dieser Ausgestaltung ist es bevorzugt, dass jeder Bypass-Funktion eine Priorität zugewiesen wird und dass die Kontrollinstanz die Verteilung der Bypass-Funktionen auf unterschiedliche Rechenkerne anhand der unterschiedlichen Prioritäten der Bypass-Funktion steuert, insbesondere derart, dass Bypass-Funktionen mit hoher Priorität mehr Rechenressourcen zur Verfügung gestellt werden als Bypass-Funktionen mit niedriger Priorität. Dabei ist die Kontrollinstanz ausgestaltet, die Abarbeitung einer Bypass-Funktion zugunsten einer anderen Bypass-Funktion mit höherer Priorität zu unterbrechen, um zur Abarbeitung der anderen Bypass-Funktion mehr Rechenressourcen zur Verfügung zu stellen.

In einer anderen möglichen Ausgestaltung sind mehrere Bypass-Funktionen vorgesehen, um eine einzige erste Funktion alternativ zu beeinflussen. Beispielsweise kann es vorgesehen sein, dass alle Bypass-Funktionen parallel auf jeweils einem eigenen , nicht mit dem ersten Rechenkern identischen Rechenkern abgearbeitet werden, wobei jede Bypass-Funktion der Variablen einen Wert zuordnet und die Kontrollinstanz die Variable zum zweiten Zeitpunkt mit einem der mehreren zweiten Werte überschreibt. Beispielsweise kann jede Bypass-Funktion der Variablen einen zweiten Wert zuordnen und den jeweiligen zweiten Wert in eine jeweilige Adresse des Pufferbereichs schreiben, und die Kontrollinstanz ist ausgestaltet, von den mehreren im Pufferbereich hinterlegten zweiten Werten einen bestimmten auszulesen und zum zweiten Zeitpunkt in die Speicheradresse der Variablen zu schreiben. Besonders bevorzugt wählt die Kontrollinstanz den zweiten Wert anhand einer Eingabe eines Anwenders aus, wobei es dem Anwender möglich ist, die Eingabe zur Laufzeit der Abarbeitung des Steuerprogramms durch den ersten Rechenkern zu ändern, beispielsweise anhand eines mittels einer Schnittstelleneinheit mit dem Steuergerät verbundenen Computers. Auf diese Weise ist es einem Anwender möglich, zwischen einer Vielzahl von Bypass-Funktionen zur Beeinflussung der ersten Funktion zu wechseln, ohne dafür die Abarbeitung des Steuerprogramms zu unterbrechen. Es kann auch vorgesehen sein, dass mehrere Bypass-Funktionen im Speicher hinterlegt sind und nur der zweite Rechenkern mit der Abarbeitung einer der mehreren Bypass-Funktionen beaufschlagt ist, wobei die Kontrollinstanz anhand einer Eingabe eines Anwenders die Abarbeitung einer ausgewählten Bypass-Funktion durch den zweiten Rechenkern startet.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die laterale und vertikale Erstreckung sind nicht maßstabsgerecht und weisen, sofern nicht anders angegeben, auch keine ableitbare geometrische Relation zueinander auf. Es zeigen die
Figur 1 eine erste erfindungsgemäße Ausführungsform mit dem internen Aufbau eines Steuergeräts in Verbindung mit einem Sensor und einem Aktor und mit einer als Zusatzprogrammteil ausgebildeten Kontrollinstanz,
Figur 2 eine zweite erfindungsgemäße Ausführungsform mit dem internen Aufbau eines Steuergeräts mit einer als Kontrollprogramm ausgebildeten Kontrollinstanz,
Figur 3 eine dritte erfindungsgemäße Ausführungsform mit dem internen Aufbau eines Steuergeräts mit einer als Überwachungseinheit ausgebildeten Kontrollinstanz,
Figur 4 eine Darstellung des erfindungsgemäßen Verfahrens in Form eines Zeitdiagramms mit verschiedenen Lese- und Schreibzugriffen auf Variablen,
Figur 5 eine erste bevorzugte Ausgestaltung des erfindungsgemäßen Verfahrens in Form eines Zeitdiagramms, mit einer als Zusatzprogrammteil ausgebildeten Kontrollinstanz,
Figur 6 eine zweite bevorzugte Ausführungsform des erfindungsgemäßen Verfahrens in Form eines Zeitdiagramms, mit einer als Kombination aus Zusatzprogrammteil und Überwachungseinheit ausgebildeten Kontrollinstanz,
Figur 7 eine dritte bevorzugte Ausführungsform des erfindungsgemäßen Verfahrens in Form eines Zeitdiagramms, mit einer als Überwachungseinheit ausgebildeten Kontrollinstanz.

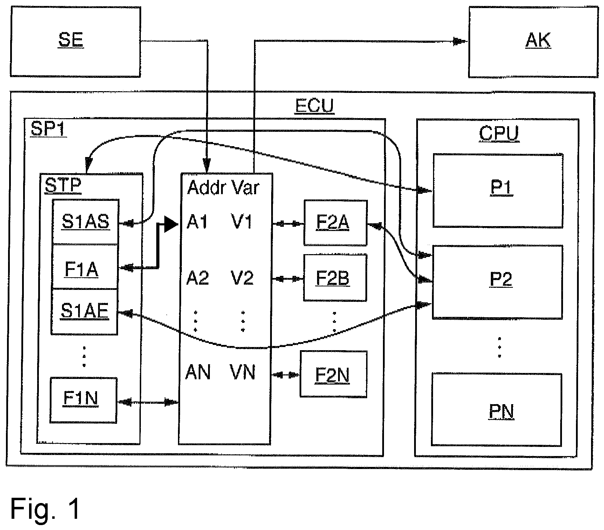

Die Abbildung der Figur 1 zeigt ein Steuergerät ECU, aufweisend einen Speicher SP1, einen Prozessor CPU, einen mit dem Steuergerät ECU in einer elektrischen Wirkverbindung stehenden Sensor SE und einen mit dem Steuergerät ECU in einer elektrischen Wirkverbindung stehenden Aktor AK. Der Speicher SP1 beinhaltet ein als Binärcode hinterlegtes Steuerprogramm STP, das eine Vielzahl von ersten Funktionen F1A, F1B, ..., F1N umfasst. Der Speicher SP1 lässt sich aus unterschiedlichen Speichertypen, wie beispielsweise Flüchtigwertspeicher und Festwertspeicher, ausbilden. Der Speicher SP1 enthält weiterhin eine Vielzahl von Bypass-Funktionen F2A, F2B, ..., F2N und eine Vielzahl von Variablen V1, V2, ..., VN des Steuerprogramms STP auf den Speicheradressen A1, A2, ..., AN.

Zwischen der Menge der ersten Funktionen F1A, ..., F1N und der Menge der Bypass-Funktionen F2A, ..., F2N besteht eine Zuordnung, derart, dass jede Bypass-Funktion F2A, ..., F2N vorgesehen ist, eine bestimmte erste Funktion F1A, ..., F1N zu beeinflussen, wobei der Programmcode jeder Bypass-Funktion F2A, ..., F2N sich von der ihr jeweils zugeordneten ersten Funktion F1A, ..., F1N zumindest teilweise unterscheidet. Die Anzahl der auf dem Speicher SP1 hinterlegten ersten Funktionen und Bypass-Funktionen ist im allgemeinen nicht identisch. Es ist nicht vorgesehen, jeder ersten Funktion eine Bypass-Funktion zuzuordnen. Außerdem können in einer Ausgestaltung der Erfindung einer ersten Funktion mehrere Bypass-Funktionen zugeordnet sein, um die erste Funktion alternativ zu beeinflussen.

Der Prozessor CPU enthält neben einem ersten Rechenkern P1 und einem zweiten Rechenkern P2 eine weitere Vielzahl von Rechenkernen P3, ..., PN. Außerdem weist der Prozessor eine nicht dargestellte Schnittstelle für eine Kommunikation mit einer außerhalb des Steuergerätes ausgebildeten, mit dem Steuergerät verschaltbaren Überwachungseinheit - ebenfalls nicht dargestellt - auf. In dem Steuergerät ECU arbeitet der erste Rechenkern P1 das Steuerprogramm STP ab. Das Steuerprogramm STP liegt als binärer Programmcode vor und umfasst eine Vielzahl von Aufrufen erster Funktionen F1A, ..., F1N. Eine Aufgabe wenigstens eines Teils der ersten Funktionen F1A, ..., F1N ist das Einlesen von Daten des Sensors SE oder die Steuerung des Aktors AK. Den Funktionen F1A, ..., F1N sind innerhalb des Speichers SP1 Adressen A1, ..., AN zugeordnet, an denen Werte von Variablen V1, ..., VN hinterlegt sind. Die ersten Funktionen F1A, ..., F1N enthalten Lese- oder Schreibzugriffe auf die ihnen jeweils zugeordneten Variablen. Anders ausgedrückt werden die den Variablen zugeordneten Werte aus den den Variablen zugeordneten Speicheradressen A1, ..., AN gelesen oder ein Wert in die jeweilige Speicheradresse geschrieben.

Der erste Rechenkern P1 ist mit der Abarbeitung des Steuerprogramms STP beaufschlagt. Der zweite Rechenkern P2 ist mit der Abarbeitung einer Bypass-Funktion F2A beaufschlagt, wobei die Bypass-Funktion F2A vorgesehen ist, eine erste Funktion F1A des Steuerprogramms STP zu beeinflussen.

Eine Kontrollinstanz koordiniert die Lese- und Schreibzugriffe der Bypass-Funktion F2A auf die Variablen V1, ..., VN derart, dass die Bypass-Funktion F2A die erste Funktion F1A derart beeinflusst, dass mindestens eine von der ersten Funktion F1A mit einem ersten Wert beschriebene Variable V1 mit einem von der Bypass-Funktion F2A zugeordneten Wert überschrieben wird, und dass weiterhin Datenkonsistenz sichergestellt ist. In der dargestellten Ausführungsform in Figur 1 ist die Kontrollinstanz verwirklicht durch einen in das Steuerprogramm STP eingebundenen Zusatzprogrammteil, bestehend aus einer ersten Serviceroutine S1AS und einer zweiten Serviceroutine S1AE.

Die erste Serviceroutine S1AS wird durch den Rechenkern P1 unmittelbar vor der ersten Funktion F1A abgearbeitet. Sie liest die Werte aller für die Abarbeitung der Bypass-Funktion F2A erforderlichen Eingangsvariablen ein und hinterlegt Abbilder dieser Eingangsvariablen in einem reservierten Pufferbereich des Speichers SP1 oder eines anderen für den Prozessor CPU zugänglichen Speichers. Danach startet sie durch ein Triggersignal TR die Abarbeitung der Bypass-Funktion F2A durch den zweiten Rechenkern P2. Danach endet die erste Serviceroutine S1AS, und der erste Rechenkern P1 beginnt mit der Abarbeitung der ersten Funktion F1A, während parallel der zweite Rechenkern P2 die Bypass-Funktion F2A abarbeitet. Die Bypass-Funktion F2A liest die Werte ihrer Eingangsvariablen aus dem Pufferbereich ein. Auf diese Weise ist sichergestellt, dass die erste Funktion F1A und die Bypass-Funktion F2A für gleiche Eingangsvariablen identische Werte einlesen. Es ist beispielsweise ausgeschlossen, dass die erste Funktion F1A und die Bypass-Funktion F2A unterschiedliche Werte für eine beispielhafte Eingangsvariable V2 einlesen, weil die erste Funktion F1A die Speicheradresse A2 der Eingangsvariablen V2 bereits mit einem neuen Wert überschreibt, bevor die Bypass-Funktion diesen Wert eingelesen hat. Auf die Speicheradresse A2 greift ausschließlich die erste Funktion F1A zu, während die Bypass-Funktion F2A ausschließlich auf das in dem Pufferbereich hinterlegte Abbild der Variablen V2 zugreift.

Die erste Funktion F1A ordnet der Variablen V1 einen ersten Wert zu und schreibt den ersten Wert in die Speicheradresse A1. Die Bypass-Funktion F2A ordnet der Variablen V1 einen zweiten Wert zu und schreibt den zweiten Wert in eine Speicheradresse des Pufferbereichs BU. Die zweite Serviceroutine wird durch den Rechenkern P1 unmittelbar nach der ersten Funktion F1A abgearbeitet. Sie liest den durch die Bypass-Funktion F2A zugeordneten zweiten Wert der Variablen V1 aus dem Pufferbereich ein und schreibt den zweiten Wert in die Adresse A1, wobei der durch die erste Funktion F1A zugeordnete erste Wert überschrieben wird. Bei Bedarf wartet die zweite Serviceroutine, bis die Bypass-Funktion F2A der Variablen V1 einen zweiten Wert zugeordnet und den zweiten Wert in den Pufferbereich geschrieben hat. Danach beendet die zweite Serviceroutine S1AE durch ein Triggersignal TR die Abarbeitung der Bypass-Funktion F2A durch den zweiten Rechenkern P2.

Danach endet die zweite Serviceroutine S1AE, und der erste Rechenkern P1 setzt die Abarbeitung des Steuerprogramms STP fort. Das Steuerprogramm liest beim nächsten Lesezugriff auf die Speicheradresse A1 der Variablen V1 den durch die Bypass-Funktion F2A zugeordneten zweiten Wert ein. Wenn die Variable V1 das Verhalten des Aktors AK definiert, dann wird der Aktor AK statt von der ersten Funktion F1A von der Bypass-Funktion F2A gesteuert.

Es versteht sich, dass das Verfahren in gleicher Weise auch auf eine Vielzahl von Variablen V1, ..., VN anwendbar ist.

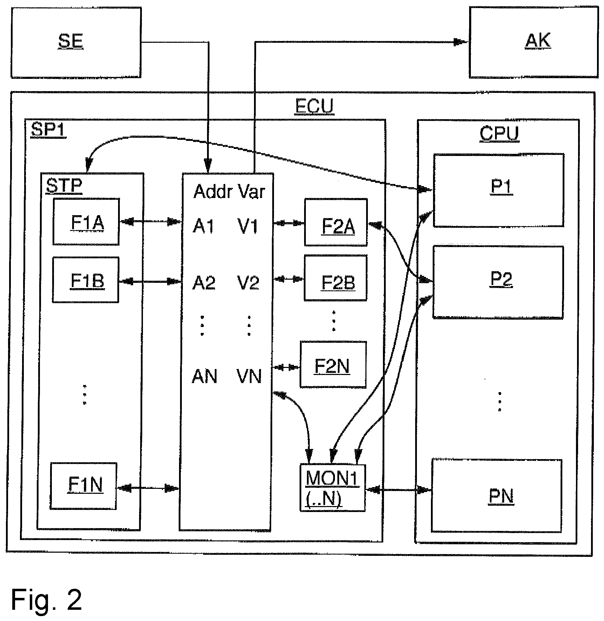

Die Abbildung der Figur 2 zeigt eine zweite Ausführungsform des erfindungsgemäßen Verfahrens. Im folgenden werden nur die Unterschiede zu der Darstellung in Figur 1 erläutert. Die Kontrollinstanz ist als Kontrollprogramm MON1 in dem Speicher SP1 ausgebildet und wird von einem N-ten Rechenkern PN abgearbeitet.

Weil das Kontrollprogramm MON1, anders als die in Figur 1 dargestellten Serviceroutinen S1AS, S1AE, nicht in das Steuerprogramm STP eingebunden ist, muss das Kontrollprogramm MON1, um die Variablenzugriffe des Steuerprogramms STP und der Bypass-Funktion F2A zeitlich aufeinander abstimmen zu können, ausgestaltet sein, die Abarbeitung des Steuerprogramms STP durch den ersten Rechenkern P1 zu überwachen und Aufrufe oder laufende Abarbeitungen von ersten Funktionen F1A, ..., F1N sowie Zugriffe auf Variablen V1, ..., VN zu detektieren. Dies geschieht bevorzugt mittels einer Datenschnittstelle des Prozessors CPU, insbesondere einer Debug-Schnittstelle, einer Trace-Schnittstelle oder einer Schnittstelle zum Auslesen des Programmcounters des ersten Rechenkerns P1.

Das Kontrollprogramm MON1 ist ausgestaltet, Schreibzugriffe des Steuerprogramms STP auf die Speicheradresse A2 der Eingangsvariablen V2 der Bypass-Funktion F2A zu detektieren, und es ist weiterhin ausgestaltet, nach einem Schreibzugriff des Steuerprogramms STP auf die Speicheradresse A2 ein Abbild des neuen Wertes der Eingangsvariablen V2 in den Pufferbereich BU zu schreiben. Bevorzugt schreibt das Kontrollprogram MON1 unmittelbar nach jedem Schreibzugriff des Steuerprogramms STP auf die Speicheradresse A2 der Eingangsvariablen V2 ein Abbild der Eingangsvariablen V2 in den Pufferbereich BU, sodass dort zu jedem Zeitpunkt ein aktuelles Abbild der Eingangsvariablen V2 vorliegt. Das Kontrollprogramm MON1 ist weiterhin ausgestaltet, Aufrufe von ersten Funktionen F1A, ..., F1N oder Rücksprünge aus ersten Funktionen F1A, ..., F1N durch den ersten Rechenkern zu detektieren und bei Beginn der Abarbeitung der ersten Funktion F1A durch den ersten Rechenkern P1 die Abarbeitung der Bypass-Funktion F2A durch den zweiten Rechenkern P2 zu starten. Bevorzugt startet das Kontrollprogramm MON1 die Bypass-Funktion F2A mittels eines Triggersignals TR.

Nachdem die Bypass-Funktion F2A den zweiten Wert der Variablen V1 im Pufferbereich BU hinterlegt hat, liest das Kontrollprogramm MON1 den zweiten Wert aus dem Pufferbereich BU. Das Kontrollprogramm MON1 ist weiterhin ausgestaltet, das Beschreiben der Speicheradresse A1 der Variablen V1 mit dem ersten Wert der Variablen V1 durch die erste Funktion F1A zu detektieren und unmittelbar nach dem Beschreiben mit dem ersten Wert die Speicheradresse A1 der Variablen V1 mit dem zweiten Wert zu überschreiben.

Es sei angemerkt, dass in einer möglichen Ausgestaltung der Erfindung entsprechend der Vielzahl zweiter Funktionen F2A, F2B, ..., F2N eine Vielzahl von Kontrollprogrammen MON1, MON2, ..., MONN vorgesehen ist, wobei die mehreren Kontrollprogramme MON1, ..., MONN jeweils auf unterschiedlichen Rechenkernen laufen können.

Ein Vorteil an der in Figur 2 dargestellten Ausführungsform ist, dass sie flexibel auf jede erste Funktion F1A, ..., F1N anwendbar ist und ohne Manipulation des Binärcodes des Steuerprogramms STP auskommt, während die in Figur 1 dargestellten Serviceroutinen S1AE, S2AE entweder bereits in den Quellcode des Steuerprogramms STP implementiert werden müssen oder durch eine Manipulation des Binärcodes des Steuerprogramms STP nachträglich in das Steuerprogramm STP eingefügt werden müssen.

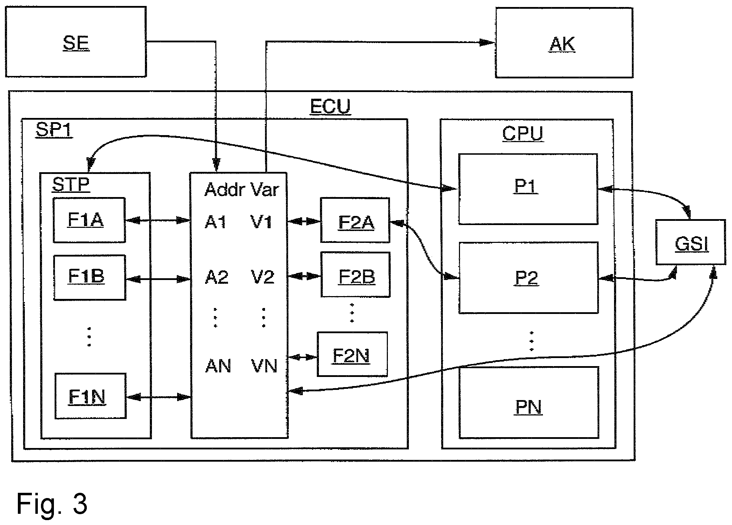

Die Abbildung der Figur 3 zeigt eine dritte Ausführungsform des erfindungsgemäßen Verfahrens. Im folgenden werden nur die Unterschiede zu der Darstellung in Figur 1 und Figur 2 erläutert. Die Kontrollinstanz ist als eine außerhalb des Steuergerätes ECU angebrachte und mit dem Steuergerät ECU verschaltbare Überwachungseinheit GSI ausgebildet. Die Funktionalität der Überwachungseinheit GSI entspricht der Funktionalität des in Figur 2 dargestellten Kontrollprogramms MON1. Das heißt, die Überwachungseinheit GSI ist ausgestaltet, mittels einer Datenschnittstelle des Prozessors CPU Aufrufe, Beendigungen oder laufende Abarbeitungen von ersten Funktion F1A durch den ersten Rechenkern zu detektieren, und sie ist bevorzugt außerdem ausgestaltet, Schreib- und Lesezugriffe auf die Speicheradressen A1, ..., AN von Variablen V1, ..., VN des Steuerprogramms STP zu detektieren. Dabei arbeitet die Überwachungseinheit eine Programmroutine ab, deren Funktionalität dem in Figur 2 dargestellten Kontrollprogramm MON1 entspricht. Dabei kann die Programmroutine in einer möglichen Ausführungsform durch einen in der Überwachungseinheit GSI verbauten Rechenkern abgearbeitet werden. In einer anderen möglichen Ausführungsform ist die Programmroutine auf der Überwachungseinheit GSI als Hardware implementiert, zum Beispiel durch ein FPGA.

Besonders bevorzugt ist die Überwachungseinheit GSI als Schnittstelleneinheit ausgestaltet, die es erlaubt, das Steuergerät ECU mit einem außerhalb des Steuergerätes ECU angelegten Computersystem zu verbinden, beispielsweise mit einem PC oder mit einer Rapid-Prototyping-Hardware, und das Steuergerät ECU von diesem Computersystem aus anzusteuern oder zu beeinflussen.

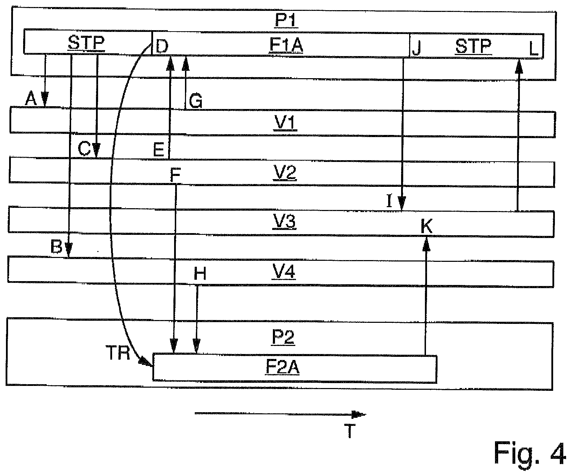

Die Abbildung der Figur 4 veranschaulicht anhand eines Zeitstrahls die erfindungsgemäßen Verfahrensschritte. Ereignisse im Steuergerät ECU sind gemäß der dargestellten Zeitachse T von links nach rechts zeitlich geordnet, d.h. die dargestellten Ereignisse finden umso später statt, je weiter rechts in der Abbildung sie angeordnet sind. In den nachfolgenden Beschreibungen sind die Ereignisse entsprechend ihrer Position auf der Zeitachse in alphabetischer Ordnung bezeichnet. Ihre alphabetische Sortierung entspricht also ihrer zeitlichen Reihenfolge in der Abbildung, und Ereignisse mit gleicher alphabetischer Bezeichnung sind entsprechend ihrer zeitlichen Reihenfolge numerisch sortiert. Beispielsweise findet ein Ereignis mit der Bezeichnung B später statt als ein Ereignis mit der Bezeichnung A, und ein Ereignis mit der Bezeichnung A2 später als ein Ereignis mit der Bezeichnung A1.

Ein erster Rechenkern P1 arbeitet ein Steuerprogramm STP mit einer ersten Funktion F1A ab, und ein zweiter Rechenkern P2 arbeitet eine Bypass-Funktion F2A ab. Das Steuerprogramm STP beschreibt zu einem Zeitpunkt A eine erste Variable V1, d.h. es schreibt einen neuen Wert in die Speicheradresse A1 der ersten Variablen V1. Weiterhin beschreibt es zu einem Zeitpunkt B eine vierte Variable V4 und zu einem Zeitpunkt C eine zweite Variable V2, bevor es zu einem Zeitpunkt D die erste Funktion F1A aufruft. Gleichzeitig mit dem Aufruf der ersten Funktion F1A wird mittels eines Triggersignals TR die Abarbeitung der Bypass-Funktion F2A durch den zweiten Rechenkern P2 gestartet.

Sowohl die erste Funktion F1A als auch die Bypass-Funktion F2A lesen zu unterschiedlichen Zeitpunkten E, F den Wert der Variablen V2 als Eingangsvariable ein. Weiterhin liest die erste Funktion F1A zu einem Zeitpunkt G den Wert der Variablen V1 als Eingangsvariable ein, und die Bypass-Funktion F2A liest zu einem Zeitpunkt H den Wert der Variablen V4 als Eingangsvariable ein. Beide Funktionen ordnen daraufhin der Variablen V3 einen Wert zu. Die erste Funktion F1A schreibt zu einem ersten Zeitpunkt I einen ersten Wert der Variablen V3 in die Speicheradresse A3. Zu einem Zeitpunkt J erfolgt der Rücksprung aus der ersten Funktion F1A, d.h. die erste Funktion F1A wird beendet und die Abarbeitung des Steuerprogramms STP durch den ersten Rechenkern P1 fortgesetzt. Zu einem Zeitpunkt K schreibt die Bypass-Funktion F2A einen zweiten Wert für die Variable V3 in die Speicheradresse A3 der Variablen V3 und überschreibt dadurch den von der ersten Funktion F1A geschriebenen Wert. Zu einem Zeitpunkt L liest das Steuerprogramm den durch die Bypass-Funktion F2A geschriebenen zweiten Wert der Variablen V3 ein.

In der dargestellten Abbildung ist die Variable V2 eine Eingangsvariable sowohl für die erste Funktion F1A als auch für die Bypass-Funktion F2A. Zur Wahrung von Datenkonsistenz muss die Kontrollinstanz deshalb sicherstellen, dass beide Funktionen F1A, F2A für die Variable V2 identische Werte einlesen. Weiterhin muss die Kontrollinstanz sicherstellen, dass der Zeitpunkt K nach dem Zeitpunkt I, aber vor dem Zeitpunkt L liegt, damit das Steuerprogramm STP zum Zeitpunkt L den von der Bypass-Funktion F2A zugeordneten zweiten Wert für die dritte Variable V3 einliest.

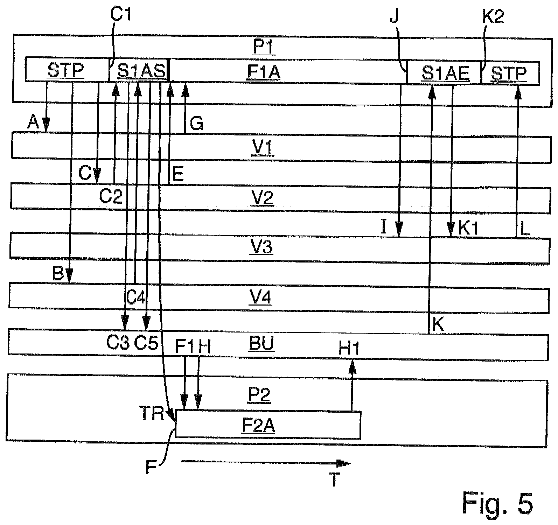

Die Abbildung der Figur 5 zeigt in einem weiteren Zeitdiagramm die der in Figur 1 dargestellten Ausführungsform entsprechenden Verfahrensschritte. Im folgenden werden nur die Unterschiede zu der Darstellung in Figur 4 erläutert. Der erste Rechenkern P1 arbeitet unmittelbar vor Abarbeitung der ersten Funktion F1A eine erste Serviceroutine S1AS ab, und er arbeitet unmittelbar nach Abarbeitung der ersten Funktion F1A eine zweite Serviceroutine S1AE ab. Es ist weiterhin ein Pufferbereich BU zur Speicherung von ersten oder zweiten Werten von Variablen, V1, ..., V4 vorgesehen. Zu einem Zeitpunkt C1 beginnt der erste Rechenkern mit der Abarbeitung der ersten Serviceroutine S1AS, die im folgenden die Werte der Eingangsvariablen V2, V4 der Bypass-Funktion F2A einliest und im Pufferbereich BU hinterlegt. Zu einem Zeitpunkt C2 liest sie den Wert der ersten Eingangsvariablen V2 aus der Speicheradresse A2 aus und schreibt ihren Wert unmittelbar darauf, zu einem Zeitpunkt C3, in den Pufferbereich BU. Zu einem Zeitpunkt C4 liest sie den Wert der zweiten Eingangsvariablen V4 aus der Speicheradresse A4 aus und schreibt ihn unmittelbar darauf, zu einem Zeitpunkt C5, ebenfalls in den Pufferbereich BU. Zu einem Zeitpunkt F startet die erste Serviceroutine S1AS die Abarbeitung der Bypass-Funktion F2A durch den zweiten Rechenkern P2 mittels eines Triggersignals TR. Unmittelbar darauf erfolgt der Rücksprung aus der ersten Serviceroutine S1AS, und der erste Rechenkern P1 beginnt mit der Abarbeitung der ersten Funktion F1A. Erste Funktion F1A und Bypass-Funktion F2A starten also praktisch gleichzeitig und werden im folgenden parallel abgearbeitet.

Die Bypass-Funktion F2A liest zu den Zeitpunkten F1 und H die Werte ihrer Eingangsvariablen V2, V4 aus dem Pufferbereich BU aus, ordnet im folgenden der Variablen V3 einen zweiten Wert zu und schreibt den zweiten Wert zu einem Zeitpunkt H1 in den Pufferbereich BU. Die erste Funktion F1A schreibt zu einem Zeitpunkt I einen durch die erste Funktion F1A zugeordneten ersten Wert für die Variable V3 in die Speicheradresse A3. Zu einem Zeitpunkt J wird die erste Funktion F1A beendet, und der erste Rechenkern beginnt mit der Abarbeitung der zweiten Serviceroutine S1AE. Diese liest zu einem Zeitpunkt K den durch die Bypass-Funktion F2A im Pufferbereich BU hinterlegten zweiten Wert für die Variable V3 ein und schreibt diesen zu einem Zeitpunkt K1 in die Speicheradresse A3 der Variablen V3. Daraufhin endet die zweite Serviceroutine S1AE zu einem Zeitpunkt K2, und der erste Rechenkern P1 setzt die Abarbeitung des Steuerprogramms STP fort, das zu einem Zeitpunkt L den durch die zweite Serviceroutine S1AS hinterlegten, durch die Bypass-Funktion F2A zugeordneten zweiten Wert für die dritte Variable V3 aus deren Speicheradresse A3 ausliest.

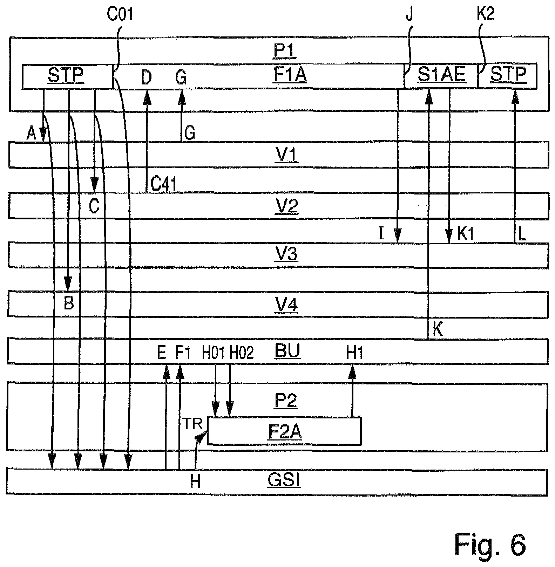

Die Abbildung der Figur 6 zeigt ein Zeitdiagramm für ein weiteres, in den vorhergehenden Figuren nicht dargestelltes Ausführungsbeispiel, in dem die Kontrollinstanz durch eine Kombination aus einer mit dem Steuergerät verschaltbaren Überwachungseinheit GSI und einem Zusatzprogrammteil in Form einer Serviceroutine S1AE verwirklicht ist. Bevorzugt ist die Überwachungseinheit GSI als Schnittstelleneinheit ausgebildet, und die Serviceroutine S1AE wird mittels der Überwachungseinheit GSI und eines mittels der Überwachungseinheit GSI mit dem Steuergerät ECU verschalteten Computers in den Binärcode des Steuerprogramms STP integriert. Im folgenden werden nur die Unterschiede zu den Figuren 4 und 5 erläutert.

Die Überwachungseinheit GSI ist ausgestaltet, Schreibzugriffe des Steuerprogramms STP auf Variablen V1, ..., V4 sowie Aufrufe von ersten Funktionen F1A, ..., F1N durch den ersten Rechenkern zu detektieren. Alle Schreibzugriffe des Steuerprogramms STP auf Variablen zu den Zeitpunkten A, B und C werden detektiert und die jeweils neuen Werte der Variablen in einem internen Speicher der Überwachungseinheit GSI gespeichert, sodass in dem internen Speicher der Überwachungseinheit GSI zu jedem Zeitpunkt ein aktuelles Abbild aller Variablen V1, ..., V4 des Steuerprogramms STP abgelegt ist. Zu einem Zeitpunkt C01 ruft der erste Rechenkern die erste Funktion F1A auf. Dieser Aufruf der ersten Funktion F1A wird durch die Überwachungseinheit GSI detektiert. Die Überwachungseinheit unterbricht unmittelbar, nachdem sie den Aufruf der Funktion F1A detektiert hat, die Speicherung von neuen Werten von Variablen V1, ..., V4 in ihrem internen Speicher und schreibt zu den Zeitpunkten E und F1 die aktuellen Werte der Eingangsvariablen V2, V4 der Bypass-Funktion F2A in den Pufferbereich BU. Nachdem die Werte aller Eingangsvariablen V2, V4 der Bypass-Funktion F2A im Pufferbereich BU abgelegt sind, startet die Überwachungseinheit GSI mittels eines Triggersignals TR die Abarbeitung der Bypass-Funktion F2A durch den zweiten Rechenkern P2. Die Bypass-Funktion F2A liest zu den Zeitpunkten H01 und H02 die Werte ihrer Eingangsvariablen V2, V4 aus dem Pufferbereich BU ein. Die erste Funktion F1A und die Bypass-Funktion F2A lesen auf diese Weise identische Werte für die gemeinsam genutzte Eingangsvariable V2 ein.

In einer anderen möglichen Ausführung schreibt die Überwachungseinheit GSI die Werte jeder Eingangsvariablen V2, V4 der Bypass-Funktion F2A unmittelbar nach jedem Schreibzugriff des Steuerprogramms auf die Eingangsvariable V2, V4 in den Pufferbereich BU und unterbricht das Schreiben der Werte der Eingangsvariablen V2, V4 in den Pufferbereich unmittelbar nach Aufruf der ersten Funktion F1A, sodass im Pufferbereich BU bis zum Aufruf der ersten Funktion F1A zu jedem Zeitpunkt ein aktuelles Abbild der Eingangsvariablen V2, V4 der Bypass-Funktion F2A vorliegt.

Die Bypass-Funktion F2A ordnet der Variablen V3 einen zweiten Wert zu und schreibt diesen zu einem Zeitpunkt H1 in den Pufferbereich BU. Zu einem Zeitpunkt K liest die Serviceroutine S1AE den zweiten Wert aus und schreibt ihn zu einem Zeitpunkt K1 in die Speicheradresse A3 der Variablen V3. Dabei überschreibt sie den zum Zeitpunkt I von der ersten Funktion F1A geschriebenen ersten Wert.

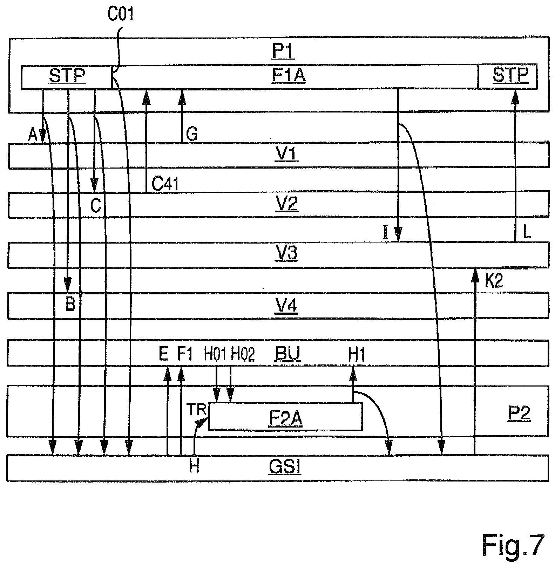

Die Abbildung der Figur 7 zeigt in einem weiteren Zeitdiagramm die der in Figur 3 dargestellten Ausführungsform entsprechenden Verfahrensschritte. Im folgenden werden nur die Unterschiede zu der Darstellung in den Figuren 4 bis 6 erläutert. Die Kontrollinstanz ist durch eine Überwachungseinheit GSI ausgebildet. Die Bypass-Funktion F2A schreibt zu einem Zeitpunkt H1 den zweiten Wert der Variablen V3 in den Pufferbereich BU. Die Überwachungseinheit GSI detektiert diesen Schreibzugriff und schreibt ein Abbild des im Pufferbereich BU hinterlegten zweiten Wertes der Variablen V3 in ihren internen Speicher. Zum Zeitpunkt I schreibt die erste Funktion F1A einen ersten Wert der Variablen V3 in die Speicheradresse A3 der Variablen V3. Die Überwachungseinheit GSI detektiert auch diesen Schreibzugriff und schreibt unmittelbar, nachdem die erste Funktion F1A den ersten Wert der Variablen V3 in die Speicheradresse A3 geschrieben hat, den zweiten Wert der Variablen in die Speicheradresse A3 und überschreibt dabei den von der ersten Funktion F1A dort hinterlegten ersten Wert.

Es sei angemerkt, dass die Funktionalität der in den Figuren 6 und 7 dargestellten Überwachungseinheit GSI vollständig oder teilweise durch ein auf dem Steuergerät ECU hinterlegtes Kontrollprogramm MON1 ersetzbar ist.

## Patentansprüche

1. Verfahren zur Beeinflussung eines Steuerprogramms (STP) eines Steuergerätes (ECU), wobei das Steuergerät (ECU) einen ersten Speicher (SP1) zur Aufnahme des Steuerprogramms (STP) aufweist und das Steuerprogramm (STP) eine Vielzahl von ersten Funktionen (F1A, F1B, ..., F1N) aufweist, wobei wenigstens eine der ersten Funktionen (F1A, F1B, ..., F1N) für die Steuerung eines Aktors (AK) ausgebildet ist,
wobei eine Vielzahl von Variablen (V1, V2, ..., VN) vorgesehen ist und jeder der Variablen (V1, V2, ..., VN) eine Speicheradresse (A1, A2, ..., AN) zugeordnet ist, wobei zwischen den Variablen (V1, V2, ..., VN) und den ersten Funktionen (F1A, F1B, ..., F1N) eine vorgegebene Zuordnung ausgebildet ist,
wobei das Steuergerät (ECU) mindestens einen Prozessor (CPU) aufweist und die Prozessoren (CPU) des Steuergeräts (ECU) insgesamt eine Vielzahl von Rechenkernen (P1, P2, ..., PN) aufweisen,
wobei von einem ersten Rechenkern (P1) das Steuerprogramm (STP) mit den ersten Funktionen (F1A, F1B, ..., F1N) abgearbeitet wird und während der Abarbeitung des Steuerprogramms (STP) in einem nicht mit der Abarbeitung des Steuerprogramms (STP) beaufschlagten zweiten Rechenkern (P2) des Steuergeräts (ECU) eine Bypass-Funktion (F2A) abgearbeitet wird,
wobei eine erste Funktion (F1A) einer Variablen (V1) einen ersten Wert zuordnet und den ersten Wert zu einem ersten Zeitpunkt in die Speicheradresse (A1) der Variablen (V1) schreibt
und die Bypass-Funktion (F2A) der Variablen (V1) einen zweiten Wert zuordnet, zu einem zweiten Zeitpunkt die Variable (V1) mit dem zweiten Wert überschrieben wird und zu einem dritten Zeitpunkt das Steuerprogramm (STP) auf den geänderten Wert der Variablen (V1) zugreift,
wobei die Bypass-Funktion (F2A) wenigstens teilweise einen zu der ersten Funktion (F1A) unterschiedlichen Programmcode aufweist,
**dadurch gekennzeichnet, dass** mittels einer Kontrollinstanz die Zugriffe auf die Speicheradresse (A1) der Variablen (V1) derart zeitlich aufeinander abgestimmt werden, dass der erste Zeitpunkt vor dem zweiten Zeitpunkt liegt und der zweite Zeitpunkt vor dem dritten Zeitpunkt liegt,
wobei die Kontrollinstanz durch ein Kontrollprogramm (MON1) verwirklicht ist und das Kontrollprogramm (MON1) auf einem anderen Rechenkern (P2, P3, ..., PN) des Steuergeräts als dem ersten Rechenkern (P1) oder auf einem außerhalb des Steuergeräts (ECU) angelegten Rechenkern abgearbeitet wird,
oder die Kontrollinstanz durch eine mit dem Steuergerät (ECU) verschaltbare Überwachungseinheit (GSI), insbesondere eine als Schnittstelleneinheit ausgestaltete Überwachungseinheit (GSI), verwirklicht ist.

2. Verfahren nach einem der vorhergehenden Ansprüche, **dadurch gekennzeichnet, dass** die Kontrollinstanz ausgestaltet ist, mittels Überwachung einer Datenschnittstelle eines Prozessors (CPU), insbesondere einer Schnittstelle zum Auslesen eines Programmcounters, einer Trace-Schnittstelle oder einer Debug-Schnittstelle, Aufrufe, laufende Abarbeitungen oder Beendigungen von Funktionen (F1A, F1B, ..., F1N) des Steuerprogramms (STP) durch den ersten Rechenkern (P1) zu detektieren.

3. Verfahren nach Anspruch 2, **dadurch gekennzeichnet, dass** die Kontrollinstanz nach Beendigung der ersten Funktion (F1A) die Überschreibung der Variablen (V1) mit dem zweiten Wert veranlasst.

4. Verfahren nach einem der vorhergehenden Ansprüche, **dadurch gekennzeichnet, dass** die Abarbeitung der Bypass-Funktion (F2A) durch ein Triggersignal (TR) oder durch das Setzen des Programmcounters des zweiten Rechenkerns gestartet wird.

5. Verfahren nach einem der Ansprüche 2 bis 4, **dadurch gekennzeichnet, dass** die Kontrollinstanz unmittelbar nach Aufruf der ersten Funktion (F1A) durch den ersten Rechenkern (P1) oder unmittelbar nach Beendigung der der ersten Funktion (F1A) vorhergehenden Funktion des Steuerprogramms (STP) oder unmittelbar nach Erkennung einer laufenden Abarbeitung der ersten Funktion (F1A) durch den ersten Rechenkern (P1) die Abarbeitung der Bypass-Funktion (F2A) durch den zweiten Rechenkern (P2) startet.

6. Verfahren nach einem der vorhergehenden Ansprüche, **dadurch gekennzeichnet, dass** die Bypass-Funktion (F2A) parallel auf dem zweiten Rechenkern (P2) und zumindest einem dritten Rechenkern (P3) abgearbeitet wird, insbesondere wobei die Kontrollinstanz die Verteilung der Bypass-Funktion (F2A) auf einen oder mehrere Rechenkerne steuert.

7. Verfahren nach einem der vorhergehenden Ansprüche, **dadurch gekennzeichnet, dass** die Kontrollinstanz anhand einer Verzögerung des Steuerprogramms (STP) oder anhand der Wahl des zweiten Zeitpunktes sicherstellt, dass der dritte Zeitpunkt nach dem zweiten Zeitpunkt liegt.

8. Verfahren nach einem der vorhergehenden Ansprüche, **dadurch gekennzeichnet, dass** die Kontrollinstanz ausgestaltet ist, über eine Datenschnittstelle eines Prozessors (CPU), insbesondere eine Schnittstelle zum Auslesen eines Programmcounters, eine Trace-Schnittstelle oder eine Debug-Schnittstelle, Schreibzugriffe des Steuerprogramms (STP) auf Variablen (V1, ..., VN) zu detektieren und einen ersten Wert oder einen zweiten Wert mindestens einer Variablen in eine Speicheradresse eines Pufferbereichs (BU) zu schreiben.

9. Verfahren nach Anspruch 8, **dadurch gekennzeichnet, dass** die Kontrollinstanz vor dem Beginn der Abarbeitung der Bypass-Funktion (F2A) durch den zweiten Rechenkern ein Abbild einer Eingangsvariablen (V2) der Bypass-Funktion in eine Speicheradresse des Pufferbereichs (BU) schreibt und dass die Bypass-Funktion den Wert der Eingangsvariablen (V2) aus der Speicheradresse des Pufferbereichs ausliest, wobei die Kontrollinstanz sicherstellt, dass die erste Funktion (F1A) und die Bypass-Funktion (F2A) identische Werte für die Eingangsvariable (V2) einlesen.

10. Verfahren nach Anspruch 9, **dadurch gekennzeichnet, dass** die Kontrollinstanz ausgestaltet ist, über eine Datenschnittstelle eines Prozessors (CPU), insbesondere eine Schnittstelle zum Auslesen eines Programmcounters, eine Trace-Schnittstelle oder eine Debug-Schnittstelle, Schreibzugriffe des Steuerprogramms (STP) auf die Eingangsvariable (V2) der Bypass-Funktion (F2A) zu detektieren und nach einem Schreibzugriff des Steuerprogramms (STP) auf die Eingangsvariable (V2) ein Abbild der Eingangsvariablen (V2) in die Speicheradresse des Pufferbereichs (BU) zu schreiben, und dass die Kontrollinstanz während der Abarbeitung der Bypass-Funktion (F2A) durch den zweiten Rechenkern (P2) das Schreiben des Abbilds der Eingangsvariablen (V2) in den Pufferbereich (BU) unterbricht.

11. Verfahren nach Anspruch 8, **dadurch gekennzeichnet, dass** die Bypass-Funktion (F2A) den zweiten Wert der Variablen (V1) in eine Speicheradresse des Pufferbereichs (BU) schreibt, die Kontrollinstanz das Schreiben des ersten Wertes der Variablen (V1) an die Speicheradresse (A1) der Variablen (V1) durch die erste Funktion (F1A) detektiert und die Kontrollinstanz nach dem Schreiben des ersten Wertes der Variablen (V1) durch die erste Funktion die Speicheradresse (A1) der Variablen (V1) mit dem im Pufferbereich (BU) hinterlegten zweiten Wert der Variablen (V1) überschreibt, insbesondere unmittelbar nach dem Schreiben des ersten Wertes überschreibt.

12. Verfahren nach Anspruch 11, mit dem zusätzlichen Verfahrensschritt: Ermitteln eines Wertes für die Länge des Zeitraumes zwischen dem ersten Zeitpunkt und dem dritten Zeitpunkt, insbesondere anhand einer Messung oder einer Analyse des Binärcodes des Steuerprogramms (STP), wobei die Kontrollinstanz ausgestaltet ist, die Abarbeitung des Steuerprogramms (STP) zwischen dem ersten Zeitpunkt und dem dritten Zeitpunkt zu verzögern, wenn die Länge des Zeitraums einen vorgegebenen Wert unterschreitet.

13. Verfahren nach einem der vorhergehenden Ansprüche, **dadurch gekennzeichnet, dass** mehrere Bypass-Funktionen (F2A, F2B, ..., F2N) vorgesehen sind.

14. Verfahren nach Anspruch 13, **dadurch gekennzeichnet, dass** die mehreren Bypass-Funktionen (F2A, F2B, ..., F2N) unterschiedliche Prioritäten aufweisen und mittels der Kontrollinstanz eine Verteilung der Bypass-Funktionen (F2A, F2B, ..., F2N) auf einen oder mehrere Rechenkerne (P2, ..., PN) anhand der unterschiedlichen Prioritäten der Bypass-Funktionen (F2A, F2B, ..., F2N) gesteuert wird und die Kontrollinstanz ausgestaltet ist, eine Bypass-Funktion (F2A), die von einem zweiten Rechenkern (P2) abgearbeitet wird, zu pausieren und den zweiten Rechenkern (P2) eine andere Bypass-Funktion (F2B) mit höherer Priorität abarbeiten zu lassen.

15. Verfahren nach Anspruch 13, **dadurch gekennzeichnet, dass** die mehreren Bypass-Funktionen (F2A, F2B, ..., F2N) der Variablen (V1) jeweils unterschiedliche zweite Werte zuordnen und die Kontrollinstanz ausgestaltet ist, zum zweiten Zeitpunkt die Variable (V1) mit einem der unterschiedlichen zweiten Werte zu überschreiben.

## Claims

1. A method for influencing a control program (STP) of a control device (ECU), the control device (ECU) comprising a first memory (SP1) for receiving the control program (STP) and the control program (STP) comprising a plurality of first functions (F1A, F1B, ..., F1N), at least one of the first functions (F1A, F1B, ..., F1N) being implemented for controlling an actuator (AK),
a plurality of variables (V1, V2, ..., VN) being provided and each of the variables (V1, V2, ..., VN) being associated with a memory address (A1, A2, ..., AN), a predefined association being thereby implemented between the variables (V1, V2, ..., VN) and the first functions (F1A, F1B, ..., F1N),
the control device (ECU) comprising at least one processor (CPU) and the processors (CPU) of the control device (ECU) comprising altogether a plurality of processor cores (P1, P2, ..., PN),
the control program (STP) having the first functions (F1A, F1B, ..., F1N) being processed by one first processor core (P1) and a bypass function (F2A) being processed in a second processor core (P2) of the control device (ECU) not being used for processing the control program (STP) during the processing of the control program (STP),
a first function (F1A) associating a first value with a variable (V1) and writing the first value into the memory address (A1) of the variable (V1) at a first point in time,
and the bypass function (F2A) associating a second value with the variable (V1), the variable (V1) being overwritten with the second value at a second point in time, and the control program (STP) accessing the modified value of the variable (V1) at a third point if time,
the bypass function (F2A) at least partially comprising a program code differing from the first function (F1A),
**characterized in that** the accesses of the memory address (A1) of the variable (V1) are mutually coordinated by means of a control instance, such that the first point in time is before the second point in time and the second point in time is before the third point in time,
wherein the control instance is implemented by a monitoring program (MON1) and the monitoring program (MON1) is processed on a different processor core (P2, P3, ..., PN) of the control device than the first processor core (P1) or on a processor core located outside of the control device (ECU),
or the control instance is implemented as a monitoring unit (GSI) for connecting to the control device (ECU), particularly as a monitoring unit (GSI) implemented as an interface unit.

2. The method according to any one of the preceding claims, **characterized in that** the control instance is implemented for detecting calls, running processes, or terminating of functions (F1A, F1B, ..., F1N) of the control program (STP) by the first processor core (P1) by means of monitoring a data interface of a processor (CPU), particularly an interface for reading a program counter, a trace interface, or a debug interface.

3. The method according to claim 2, **characterized in that** the control instance initiates the overwriting of the variable (V1) with the second value after termination of the first function.

4. The method according to any one of the preceding claims, **characterized in that** the processing of the bypass function (F2A) is started by a trigger signal (TR) or by setting the program counter of the second processor core.

5. The method according to any one of the claims 2 through 4, **characterized in that** the control instance starts the processing of the bypass function (F2A) by the second processor core (P2) immediately after the first processor core (P1) calls the first function (F1A) or immediately after termination of the function of the control program (STP) preceding the first function (F1A), or immediately after detecting the first processor core (P1) running the processing of the first function (F1A).

6. The method according to any one of the preceding claims, **characterized in that** the bypass function (F2A) is processed in parallel on the second processor core (P2) and at least one third processor core (P3), particularly wherein the control instance controls the distribution of the bypass function (F2A) to one or more processor cores.

7. The method according to any one of the preceding claims, **characterized in that** the control instance uses a delay of the control program (STP) or the selection of the second point in time to ensure that the third point in time is after the second point in time.

8. The method according to any one of the preceding claims, **characterized in that** the control instance is designed for detecting write accesses by the control program (STP) to variables (V1, ..., VN) by means of a data interface of a processor (CPU), particularly an interface for reading a program counter, a trace interface, or a debug interface and for writing a first value or a second value of at least one variable to a memory address of a buffer region (BU).

9. The method according to claim 8, **characterized in that** the control instance writes an image of an input variable (V2) of the bypass function to a memory address of the buffer range (BU) prior to the start of the second processor core processing the bypass function (F2A), and that the bypass function reads the value of the input variables (V2) from the memory address of the buffer range, wherein the control instance ensures that the first function (F1A) and the bypass function (F2A) read identical values for the input variable (V2).

10. The method according to claim 9, **characterized in that** the control instance is designed for detecting, by means of a data interface of a processor (CPU), particularly an interface for reading a program counter, a trace interface, or a debug interface, write accesses by the control program (STP) to the input variable (V2) of the bypass function (F2A) and for writing an image of the input variable (V2) to the memory address of the buffer region (BU) after a write access by the control program (STP) to the input variable (V2), and that the control instance interrupts the writing of the image of the input variable (V2) to the buffer region (BU) during the processing of the bypass function (F2A) by the second processor core (P2).

11. The method according to claim 8, **characterized in that** the bypass function (F2A) writes the second value of the variable (V1) to a memory address of the buffer region (BU), the control instance detects the first function F1S0 writing the first value of the variable (V1) to the memory address (A1) of the variable (V1), and the control instance overwrites the memory address (A1) of the variable (V1) with the second value of the variable (V1) stored in the buffer region (BU) after the first function of the memory address writes the first value of the variable (V1), particularly overwrites immediately after writing the first value.

12. The method according to claim 11, having the additional method step: determining a value for the length of the period of time between the first point in time and the third point in time, particularly using a measurement or an analysis of the binary code of the control program (STP), wherein the control instance is designed for delaying the processing of the control program (STP) between the first point and the third point in tame, if the length of the time period falls below a specified value.

13. The component according to any one of the preceding claims, **characterized in that** a plurality of bypass functions (F2A, F2B, ..., F2N) are provided.

14. The method according to claim 13, **characterized in that** the plurality of bypass functions (F2A, F2B, ..., F2N) comprise different priorities and a distribution of the bypass functions (F2A, F2B, ..., F2N)to one or more processor cores (P2, ..., PN) is controlled by means of the control instance using the different priorities of the bypass functions (F2A, F2B, ..., F2N), and the control instance is designed for pausing a bypass function (F2A) being processed by a second processor core (P2) and for allowing the second processor core (P2) to process a further bypass function (F2B) having higher priority.

15. The method according to claim 13, **characterized in that** the plurality of bypass functions (F2A, F2B, ..., F2N) each associate different second values with the variable (V1), and the control instance is designed for overwriting the variable (V1) with one of the differing second values at the second point.

## Revendications

1. Procédé pour influencer un programme de commande (STP) d'un appareil de commande (ECU), dans lequel l'appareil de commande (ECU) comporte une première mémoire (SP1) pour accueillir le programme de commande (STP) et le programme de commande (STP) présente une multitude de premières fonctions (F1A, F1B, F1C, ...F1N), dans lequel l'une au moins des premières fonctions (F1A, F1B, ..., F1N) se présente sous une forme permettant la commande d'un actionneur AK),
dans lequel est prévue une multitude de variables (V1, V2, ..., VN) et une adresse en mémoire (A1, A2, ..., AN) est attribuée à chacune des variables (V1, V2, ..., VN), dans lequel une allocation prédéfinie est formée entre les variables (V1, V2, ..., VN) et les premières fonctions (F1A, F1B, ..., F1N),
dans lequel l'appareil de commande (ECU) comporte au moins un processeur (CPU) et les processeurs (CPU) de l'appareil de commande (ECU) présentent au total une multitude de noyaux de calcul (P1, P2, ..., PN),
dans lequel le programme de commande (STP) avec les premières fonctions (F1A, F1B, ..., F1N) est exécuté par un premier noyau de calcul (P1) et, pendant l'exécution du programme de commande (STP), une fonction de dérivation (F2A) est exécutée dans un second noyau de calcul (P2) de l'appareil de commande (ECU) qui n'est pas occupé par l'exécution du programme de commande (STP),
dans lequel une première fonction (F1A) attribue à une variable (V1) une première valeur et écrit la première valeur à un premier instant à l'adresse en mémoire (A1) de la variable (V1)
et la fonction de dérivation (F2A) attribue à la variable (V1) une seconde valeur, la variable (V1) est sur-écrite avec la seconde valeur à un second instant et le programme de commande (STP) accède à la valeur modifiée de la variable (V1) à un troisième instant,
dans lequel la fonction de dérivation (F2A) comporte au moins partiellement un code de programme différent de la première fonction (F1A),
**caractérisé en ce que** les accès à l'adresse en mémoire (A1) de la variable (V1) sont coordonnés dans le temps par une instance de contrôle de sorte que le premier instant se situe avant le second instant et le second instant se situe avant le troisième instant,
dans lequel l'instance de contrôle est réalisée par un programme de contrôle (MON1) et le programme de contrôle (MON1) est exécuté sur un noyau de calcul (P2, P3, ..., PN) de l'appareil de commande différent du premier noyau de calcul (P1) ou sur un noyau de calcul installé hors de l'appareil de commande (ECU),
ou l'instance de contrôle est réalisée par une unité de surveillance (GSI) pouvant être connectée avec l'appareil de commande (ECU), en particulier une unité de surveillance (GSI) se présentant sous la forme d'une unité d'interface.

2. Procédé selon l'une des revendications précédentes, **caractérisé en ce que** l'instance de contrôle se présente sous une forme pour, à l'aide de la surveillance d'une interface de données d'un processeur (CPU), en particulier de l'interface de données pour la lecture d'un compteur de programme, d'une interface de traçage ou d'une interface de débogage, détecter des appels, des exécutions en cours ou des cessations des fonctions (F1A, F1B, ..., F1N) du programme de commande (STP) par le premier noyau de calcul (P1).

3. Procédé selon la revendication 2, **caractérisé en ce que** l'instance de contrôle déclenche la surécriture de la variable (V1) avec la seconde valeur après la cessation de la première fonction (F1A).

4. Procédé selon l'une des revendications précédentes, **caractérisé en ce que** l'exécution de la fonction de dérivation (F2A) est lancée par un signal de déclenchement (TR) ou par réglage du compteur de programme du second noyau de calcul.

5. Procédé selon l'une des revendications 2 à 4, **caractérisé en ce que** l'instance de contrôle démarre l'exécution de la fonction de dérivation (F2A) par le second noyau de calcul (P2) immédiatement après l'appel de la première fonction (F1A) par le premier noyau de calcul (P1) ou immédiatement après la cessation de la fonction du programme de commande (STP) précédant la première fonction (F1A) ou immédiatement après la détection d'une exécution en cours de la première fonction (F1A) par le premier noyau de calcul (P1).

6. Procédé selon l'une des revendications précédentes, **caractérisé en ce que** la fonction de dérivation (F2A) est exécutée parallèlement sur le second noyau de calcul (P2) et au moins sur un troisième noyau de calcul (P3), sachant en particulier que l'instance de contrôle commande la répartition de la fonction de dérivation (F2A) sur un ou plusieurs noyaux de calcul.

7. Procédé selon l'une des revendications précédentes, **caractérisé en ce que** l'instance de contrôle assure par une temporisation du programme de commande (STP) ou par le choix du second instant que le troisième instant soit situé après le second instant.

8. Procédé selon l'une des revendications précédentes, **caractérisé en ce que** l'instance de contrôle se présente sous une forme pour, via une interface de données d'un processeur (CPU), en particulier une interface pour la lecture d'un compteur de programme, une interface de traçage ou une interface de débogage, détecter des accès en écriture du programme de commande (STP) sur les variables (V1, ..., VN) et écrire une première valeur ou une seconde valeur au moins d'une variable dans une adresse en mémoire d'une zone tampon (BU).

9. Procédé selon la revendication 8, **caractérisé en ce que** l'instance de contrôle, avant le début de l'exécution de la fonction de dérivation (F2A) par le second noyau de calcul, écrit une image d'une variable d'entrée (V2) de la fonction de dérivation dans une adresse en mémoire de la zone tampon (BU) et que la fonction de dérivation lit la valeur de la variable d'entrée (V2) depuis l'adresse en mémoire de la zone tampon, sachant que l'instance de contrôle assure que la première fonction (F1A) et la fonction de dérivation (F2A) lisent des valeurs identiques pour la variable d'entrée (V2).

10. Procédé selon la revendication 9, **caractérisé en ce que** l'instance de contrôle se présente sous une forme pour, via une interface de données d'un processeur (CPU), en particulier une interface pour la lecture d'un compteur de programme, une interface de traçage ou une interface de débogage, détecter des accès en écriture du programme de commande (STP) sur la variable d'entrée (V2) de la fonction de dérivation (F2A) et, après l'accès en écriture du programme de commande (STP) à la variable d'entrée (V2), écrire une image de la variable d'entrée (V2) dans l'adresse en mémoire de la zone tampon (BU), et que l'instance de contrôle, pendant l'exécution de la fonction de dérivation (F2A) par le second noyau de calcul (P2), interrompt l'écriture de l'image de la variable d'entrée (V2) dans la zone tampon (BU).

11. Procédé selon la revendication 8, **caractérisé en ce que** la fonction de dérivation (F2A) écrit la seconde valeur de la variable (V1) dans une adresse en mémoire de la zone tampon (BU), l'instance de contrôle détecte l'écriture de la première valeur de la variable (V1) à l'adresse en mémoire (A1) de la variable (V1) par la première fonction (F1A) et l'instance de contrôle, après l'écriture de la première valeur de la variable (V1) par la première fonction, sur-écrit l'adresse en mémoire (A1) de la variable (V1) avec la seconde valeur de la variable (V1) stockée dans la zone tampon (BU), en particulier immédiatement après l'écriture de la première valeur.

12. Procédé selon la revendication 11, avec l'étape de procédé supplémentaire : déterminer une valeur pour la longueur d'un laps de temps entre le premier instant et le troisième instant, en particulier à l'aide d'une mesure ou d'une analyse du code binaire du programme de commande (STP), sachant que l'instance de contrôle se présente sous une forme pour temporiser l'exécution du programme de commande (STP) entre le premier instant et le troisième instant lorsque la longueur du laps de temps est inférieure à une valeur prédéfinie.

13. Procédé selon l'une des revendications précédentes, **caractérisé en ce que** plusieurs fonctions de dérivation (F2A, F2B, ..., F2N) sont prévues.

14. Procédé selon la revendication 13, **caractérisé en ce que** les plusieurs fonctions de dérivation (F2A, F2B, ..., F2N) possèdent des priorités différentes et une répartition des fonctions de dérivation (F2A, F2B, ..., F2N) sur un ou plusieurs noyaux de calcul (P2, ..., PN) est commandée à l'aide de l'instance de contrôle sur la base des différentes priorités des fonctions de dérivation (F2A, F2B, ..., F2N) et l'instance de contrôle se présente sous une forme pour mettre en attente une fonction de dérivation (F2A) qui est exécutée par un second noyau de calcul (P2) et faire exécuter par le second noyau de calcul (P2) une fonction de dérivation (F2B) différente dotée d'une priorité plus élevée.

15. Procédé selon la revendication 13, **caractérisé en ce que** les plusieurs fonctions de dérivation (F2A, F2B, ..., F2N) attribuent respectivement à la la variable (V1) des secondes valeurs différentes et l'instance de contrôle se présente sous une forme pour, au second instant, sur-écrire la variable (V1) avec l'une des secondes valeurs différentes.
